## Europäisches Patentamt
## European Patent Office
## Office européen des brevets

(19)

(11) Numéro de publication: **0 278 798**
**B1**

(12) **FASCICULE DE BREVET EUROPEEN**

(45) Date de publication du fascicule du brevet:
**11.04.90**

(51) Int. Cl.⁴: **F16F 13/00**

(21) Numéro de dépôt: **88400054.8**

(22) Date de dépôt: **12.01.88**

(54) Support élastique, notamment pour la suspension d'un moteur de véhicule.

(30) Priorité: **20.01.87 FR 8700589**

(43) Date de publication de la demande:
**17.08.88 Bulletin 88/33**

(45) Mention de la délivrance du brevet:
**11.04.90 Bulletin 90/15**

(84) Etats contractants désignés:
**DE ES GB IT SE**

(56) Documents cités:
**EP-A- 0 044 908**
**EP-A- 0 236 161**
**FR-A- 1 189 778**

**PATENT ABSTRACTS OF JAPAN,**
**vol. 10, no. 2 (M-444)[2059], 8 janvier 1986; &**
**JP-A-60 166 509 (TOYOTA JIDOSHA K.K.) 29-08-1985**
**PATENT ABSTRACTS OF JAPAN,**
**vol. 11, no. 1 (M-550)[2448], 6 janvier 1987; &**
**JP-A-61 180 036 (TOKAI RUBBER IND. LTD) 12-08-1986**
**PATENT ABSTRACTS OF JAPAN,**
**vol. 10, no. 372 (M-372)[2429], 11 décembre 1986; &**
**JP-A-61 165 040 (TOKAI RUBBER IND. LTD) 25-07-1986**
**PATENT ABSTRACTS OF JAPAN,**
**vol. 10, no. 18 (M-448)[2075], 24 janvier 1986; &**
**JP-A-60 176 802 (TOYOTA JIDOSHA K.K.) 10-09-1985**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Le Salver, Robert, Rue des Coteaux, F-78570 Chanteloup Les Vignes(FR)**
Inventeur: **Poupard, Dominique, 6, rue du Lac, F-92370 Chaville(FR)**

(74) Mandataire: **Moncheny, Michel et al, c/o Cabinet Lavoix 2 Place d'Estienne d'Orves, F-75441 Paris Cedex 09(FR)**

(56) Documents cités: (suite)
**PATENT ABSTRACTS OF JAPAN,**
**vol. 8, no. 140 (M-305)[1577], 29 juin 1984; &**
**JP-A-59 37 348 (TOUKAI GOMU KOGYO K.K.) 29-02-1984**

## Description

La présente invention se rapporte aux supports élastiques destinés à être interposés entre un ensemble mécanique vibrant, par exemple un groupe moto-propulseur de véhicule, et un autre ensemble, par exemple la structure de ce même véhicule.

De façon plus précise, l'invention s'applique à tous les supports élastiques du type comprenant une masse en matériau élastomère, de forme annulaire disposée entre deux armatures dont l'une est adaptée pour être reliée à l'un des deux ensembles et dont l'autre est adaptée pour être reliée à l'autre ensemble, par l'intermédiaire d'une pièce de fixation qui traverse le support de part en part suivant son axe, au moins une chambre annulaire remplie de fluide étant délimitée radialement vers l'intérieur par la masse en matériau élastomère. Un tel support est décrit dans le JP-A 60 166 509.

On sait que ces supports à axe traversant présentent, du fait de leur conception , une raideur propre plus grande que les supports comparables sans axe traversant.

L'invention a pour but de réaliser un tel support qui présente, tant dans le sens radial que dans le sens transversal, une raideur propre qui ne soit pas supérieure à celle d'un support ne comportant pas d'axe traversant, de manière à améliorer le filtrage des vibrations à haute fréquence, tout en conservant un bon amortissement des trépidations à basse fréquence et fortes amplitudes.

On rappellera que la raideur propre d'un support hydroélastique peut être définie comme étant la raideur mesurée à pression intérieure constante.

A cet effet, l'invention a pour objet un support élastique du type défini ci-dessus, caractérisé en ce que la chambre annulaire est délimitée radialement vers l'extérieur par une membrane souple de forme sensiblement semi-torique, reliée de façon étanche à chacune desdites armatures.

Suivant d'autres caractéristiques :
- la membrane est réalisée en un matériau élastomère armé de fils textiles ou métalliques orientés suivant des directions inclinées par rapport à l'axe X-X du support ;
- lesdites directions sont inclinées suivant des angles inférieurs à 30° par rapport à l'axe du support ;
- l'une des armatures comprend une plaque percée d'un orifice central et deux pièces d'armature fixées respectivement à la périphérie interne et à la périphérie externe de ladite plaque et comportant des parties cylindriques concentriques, une paroi annulaire élastique étant fixée entre ces deux pièces d'armature, pour délimiter une deuxième chambre annulaire ;
- une pièce annulaire rigide est disposée dans la deuxième chambre, contre la plaque et délimite avec cette plaque un canal qui communique en des points espacés circonférentiellement d'une part avec la première chambre annulaire et, d'autre part, avec la deuxième chambre annulaire.

L'invention va être décrite plus en détail ci-dessous en se référant aux dessins annexés dans lesquels :

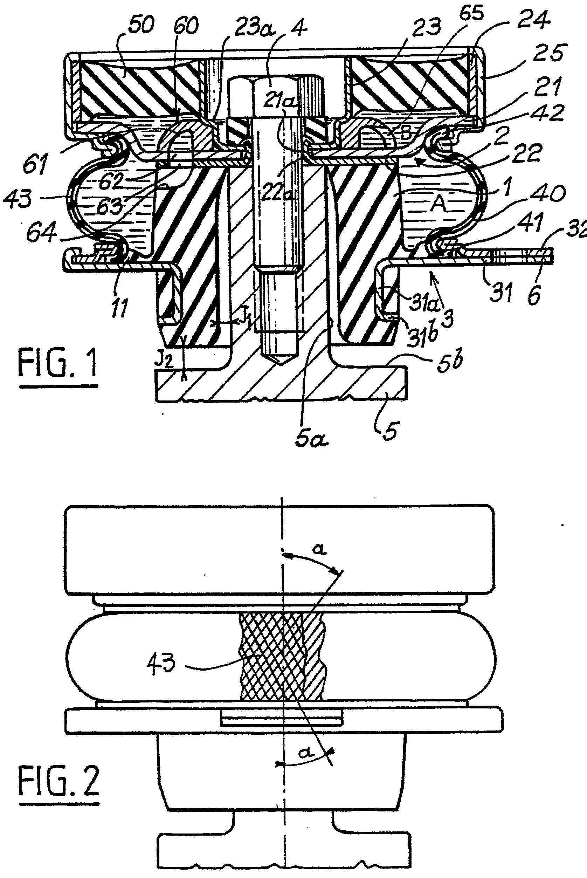

- la figure 1 est une vue en coupe axiale d'un support réalisé conformément à l'invention ;
- la figure 2 est une vue extérieure du même support.

Ce support d'axe X-X comprend un corps élastique 1, réalisé en caoutchouc ou autre élastomère, et de forme générale annulaire. Ce corps est disposé entre deux armatures métalliques 2 et 3, destinées à être reliées, respectivement, à l'un des deux ensembles (non représentés) entre lesquels le support doit être interposé. Ces deux armatures s'étendent, dans l'ensemble, perpendiculairement à l'axe X-X. Dans le mode de réalisation représenté, l'armature 2 peut par exemple être reliée au moyen d'une vis 4 et d'une pièce centrale intermédiaire 5 à un moteur tandis que l'armature 3 peut être reliée à la structure d'un véhicule au moyen de pattes 6.

L'armature 2 est constituée, ands l'exemple représenté, de plusieurs éléments : une plaque 21 en forme de coupelle, percée d'un orifice central 21a, une plaquette 22 sur laquelle est adhérisée la face supérieure de la masse en élastomère, deux pièces d'armature 23, 24 de forme générale cylindrique, disposées concentriquement à l'axe X-X, et une pièce annulaire 25 réalisant notamment l'assemblage entre la plaque 21 et l'armature 24. La pièce d'armature 23 est rendue solidaire de la plaque 21 et de la plaquette 22 par tout moyen convenable, par exemple par sertissage du bord interne 22a de la plaquette 22.

L'armature 3 est ici réalisée en deux parties 31, 32 assemblées par sertissage, la partie principale 31 ayant la forme d'une plaque emboutie dans sa partie centrale pour délimiter une jupe cylindrique 31a et un collet 31b dirigé vers l'extérieur, cette jupe et le collet étant noyés dans la masse en élastomère.

Une membrane 40 de forme semi-torique est disposée concentriquement autour du corps élastique 1, et les extrémités de cette membrane sont rendues solidaires respectivement, d'une part de l'armature 2 et d'autre part de l'armature 3. A cet effet, suivant un mode de réalisation, le bord inférieur 41 (sur le dessin) de la membrane est serré entre les plaques 31, 32 de l'armature 3. De même, le bord supérieur 42 de la membrane est serré entre la plaque 21 et le bord inférieur de la pièce 25.

La membrane 40 est de préférence réalisée en caoutchouc renforcé de fils métalliques ou textiles 43 orientés suivant des directions inclinées par rapport à l'axe X-X. L'angle d'inclinaison [a] est inférieur à 30°.

Une chambre de travail A est ainsi délimitée entre la paroi externe de la masse en élastomère, les deux armatures 2, 3 et la membrane élastique 40. On considérera en effet que l'armature 3 participe à la délimitation de la chambre A, même si, en l'espèce, la masse en élastomère comporte un bourrelet 11 qui s'étend radialement jusqu'à la membrane 40 et recouvre la plaque 31.

Le support est complété à sa partie supérieure par une paroi élastique 50 en caoutchouc ou élastomère, disposée entre les deux armatures 23 et 24 et qui délimite avec la partie supérieure de la plaque 21 une chambre d'expansion B.

Une pièce 60 ayant une forme générale de révolution, et réalisée en un matériau rigide, est disposée concentriquement à l'axe X-X au-dessus de la plaque 21. Elle est maintenue par un décrochement 23a de l'armature interne 23. Cette pièce 60 délimite un canal annulaire 61 qui communique, d'une part, avec la chambre de travail A, par l'intermédiaire d'orifices 62,63 ménagés dans la plaque 21 et la plaquette 22 et d'une échancrure 64 de la masse en élastomère et, d'autre part, avec la chambre d'expansion B, par l'intermédiaire d'une ouverture 65 ménagée dans la paroi latérale de la pièce 60. Cette pièce délimite avec la face adjacente de la plaque 21 un conduit dont le rapport entre la longueur et la dimension transversale moyenne est relativement important, (comme connu en soi), ce canal réalisant une liaison entre les chambres A, B qui sont remplies d'un fluide hydraulique.

Les débattements de ce support suivant des directions radiales et axiales sont limitées de la façon suivante:

- Un jeu radial j1 est ménagé entre la paroi interne de la masse en élastomère 1 et la surface adjacente 5a de la pièce 5;
- Un jeu axial j2 est délimité entre l'extrémité inférieure (sur le dessin) de la masse en élastomère 1 et la partie adjacente 5b de la pièce 5. Le rattrapage de ce jeu limite les débattements axiaux dans un sens;
- Le débattement axial dans le sens opposé est limité simplement par la compression du corps élastique 1 entre les deux armatures 2 et 3.

D'une façon générale le fonctionnement de ce support est analogue à celui des supports hydroélastique connus du même type. On notera cependant les particularités suivantes:

La chambre de travail A est mise sous pression lorsque le support est soumis à une charge statique, afin de placer la membrane 40 en tension. Les pressions dynamiques engendrées par les débattements axiaux de l'une des armatures 2, 3 par rapport à l'autre ont pour effet de faire varier cette tension. La disposition des fils d'armature proches de plans radiaux permet d'obtenir une grande résistance à la pression, du fait de la mise en tension de ces fils. Par contre elle procure une grande souplesse vis-à-vis des déplacements axiaux et radiaux : lors de déplacements relatifs dans le sens axial, il se produit une modification du rayon de courbure des fibres ou des fils à longueur constante tandis que lors des débattements radiaux, il se produit un mouvement d'enroulement ou de déroulement de la membrane. Dans les deux cas, les fils ne sont pas sollicités en tension, ce qui donne la caractéristique de souplesse de la membrane vis-à-vis de ces mouvements.

En variante la membrane peut être réalisée en un matériau thermoplastique à basse dureté, par exemple en polyuréthanne, l'essentiel étant que cette membrane, de par sa forme et la nature du matériau qui la compose ait un rapport raideur volumique/raideur propre très élevé.

De cette façon, on obtient un support à axe traversant présentant une raideur propre aussi faible qu'un support comparable, sans axe traversant, tant dans le sens axial que dans le sens transversal, ce qui a pour effet d'améliorer le filtrage des vibrations à haute fréquence. Par ailleurs, ce support permet d'obtenir un bon amortissement des trépidations à basse fréquence et amplitude relativement élevée.

On rappellera que, dans le cas présent où la membrane 40 délimite en partie la chambre A, entre deux armatures rigides 2,3, la raideur propre de cette membrane 40 est sa raideur lorsque la chambre A est maintenue à pression intérieure constante, tandis que sa raideur volumique est la différence entre la raideur lorsque la chambre A est maintenue à volume intérieur constant et la raideur lorsque la chambre A est maintenue à pression intérieure constante.

De plus, il est de construction simple et l'étanchéité des chambres de travail et d'expansion est réalisée avant mise en place des pièces de fixation constituées par la pièce 5 et la vis 4.

La conception du support permet également de pouvoir accéder à la fixation centrale par une face ou par l'autre, selon les impératifs de montage.

**Revendications**

1. Support élastique destiné a être interposé entre deux ensembles, tels que par exemple un groupe motopropulseur et la structure d'un véhicule automobile, ce support comprenant une masse (1) en matériau élastomère, de forme annulaire, disposée entre deux armatures (2, 3) dont l'une est adaptée pour être reliée à l'un des deux ensembles et dont l'autre est adaptée pour être reliée à l'autre ensemble, par l'intermédiaire d'une pièce de fixation qui traverse le support de part en part suivant son axe, au moins une chambre annulaire (A) remplie de fluide étant délimitée radialement vers l'intérieur par la masse en matériau élastomère, caractérisé en ce que la chambre annulaire (A) est délimitée radialement vers l'extérieur par une membrane souple (40) de forme sensiblement semi-torique, reliée de façon étanche à chacune desdites armatures (2,3).

2. Support élastique selon la revendication 1, caractérisé en ce que la membrane (40) est réalisée en un matériau élastomère armé de fils (43) textiles ou métalliques orientés suivant des directions inclinées par rapport à l'axe (X-X) du support.

3. Support élastique selon la revendication 2, caractérisé en ce que lesdites directions sont inclinées suivant des angles inférieurs à 30° par rapport à l'axe (X-X) du support.

4. Support élastique selon la revendication 1, caractérisé en ce que l'une (2) des armatures comprend une plaque (21) percée d'un orifice central et deux pièces d'armature (23, 24) fixées respectivement à la périphérie interne et à la périphérie externe de ladite plaque (21) et comportant des parties cylindriques concentriques, une paroi annulaire élastique (50) étant fixée entre ces deux pièces d'armature, pour délimiter une deuxième chambre annulaire (B).

5. Support élastique selon la revendication 4, caractérisé en ce que la membrane (40) et la pièce d'armature (24) située à la périphérie externe de la plaque (21) sont fixées à cette plaque au moyen d'une même pièce (25).

6. Support élastique selon la revendication 4, caractérisé en ce que les pièces d'armature (23, 24) sont fixées sur la plaque (21) par sertissage.

7. Support élastique selon la revendication 4, caractérisé en ce qu'une pièce annulaire rigide (60) est disposée dans la deuxième chambre (B), contre la plaque (21) et délimite avec cette plaque un canal (61) qui communique en des points espacés circonférentiellement d'une part avec la première chambre annulaire (A) et, d'autre part, avec la deuxième chambre annulaire (B).

8. Support élastique selon la revendication 7, caractérisé en ce que ladite pièce annulaire rigide (60) est maintenue axialement contre la plaque (21) par un décrochement (23a) de la pièce d'armature (23) fixée sur la périphérie interne de cette plaque.

9. Support élastique selon l'une quelconque des revendications 1 à 8, caractérisé en ce que la ou chaque chambre annulaire (A, B) est remplie d'un fluide hydraulique.

10. Support élastique selon la revendication 1, caractérisé en ce que la masse élastique (1) comporte un bourrelet radial (11) contre lequel la membrane (40) vient en appui, au niveau d'au moins l'une (3) des deux armatures (2, 3).

11. Support élastique selon la revendication 1, caractérisé en ce que la masse élastique (1) est séparée de la pièce de fixation (5) par un jeu radial (j1) et par un jeu axial (j2), pour limiter les débattements radiaux et axiaux du support.

## Patentansprüche

1. Elastisches Lager, das zwischen zwei Baugruppen, beispielsweise einer Triebwerksgruppe und der Struktur eines Kraftfahrzeugs, eingesetzt werden soll und eine ringförmige Masse (1) aus Elastomer besitzt, die zwischen zwei Flanschen (2, 3) angeordnet ist, deren einer mit einer der beiden Baugruppen verbindbar ist und deren anderer mit der anderen Baugruppe über ein Befestigungsteil verbindbar ist, das das Lager in seiner Achse vollständig durchquert, wobei mindestens eine ringförmige, mit Fluid gefüllte Kammer (A) radial nach innen durch die Masse aus Elastomer abgegrenzt ist, dadurch gekennzeichnet, daß die ringförmige Kammer (A) radial nach außen durch eine biegsame Membran (40) von im wesentlichen halbtorischer Form abgegrenzt ist, die mit jedem der Flansche (2, 3) dicht verbunden ist.

2. Elastisches Lager nach Anspruch 1, dadurch gekennzeichnet, daß die Membran (40) aus einem Elastomer besteht, der mit Textil- oder Metallfäden (43) verstärkt ist, die in gegen die Achse (X–X) des Lagers geneigten Richtungen verlaufen.

3. Elastisches Lager nach Anspruch 2, dadurch gekennzeichnet, daß die Richtungen gegen die Achse (X–X) des Lagers in Winkeln von weniger als 30° geneigt sind.

4. Elastisches Lager nach Anspruch 1, dadurch gekennzeichnet, daß einer (2) der Flansche aus einer mit einer zentralen Öffnung versehenen Platte (21) und zwei Flanschteilen (23, 24) besteht, die am Innenumfang bzw. am Außenumfang der Platte (21) befestigt sind und zueinander konzentrische, zylindrische Teile aufweisen, wobei eine elastische ringförmige Wand (50) zwischen diesen beiden Flanschteilen befestigt ist, die eine zweite ringförmige Kammer (B) abgrenzt.

5. Elastisches Lager nach Anspruch 4, dadurch gekennzeichnet, daß die Membran (40) und das am Außenumfang der Platte (21) gelegene Flanschteil (24) an dieser Platte durch ein und dasselbe Teil (25) befestigt sind.

6. Elastisches Lager nach Anspruch 4, dadurch gekennzeichnet, daß die Flanschteile (23, 24) an der Platte (21) durch Falzung bzw. Bördelung befestigt sind.

7. Elastisches Lager nach Anspruch 4, dadurch gekennzeichnet, daß ein starres ringförmiges Teil (60) in der zweiten Kammer (B) angeordnet ist, das an der Platte (21) anliegt und mit dieser einen Kanal (61) abgrenzt, der an umfangsmäßig voneinander entfernten Stellen einerseits mit der ersten ringförmigen Kammer (A) und andererseits mit der zweiten ringförmigen Kammer (B) in Verbindung ist.

8. Elastisches Lager nach Anspruch 7, dadurch gekennzeichnet, daß das starre ringförmige Teil (60) durch eine Schulter (23a) des am Innenumfang der Platte (21) befestigten Flanschteils (23) axial an die Platte (21) angedrückt gehalten ist.

9. Elastisches Lager nach einem der vorhergehenden Ansprüche, dadurch gekennzeichnet, daß die oder jede ringförmige Kammer (A, B) mit einem Hydraulikfluid gefüllt ist.

10. Elastisches Lager nach Anspruch 1, dadurch gekennzeichnet, daß die elastische Masse (1) einen radialen Wulst (11) aufweist, an dem die Membran (40) mindestens in Höhe eines (3) der beiden Flansche (2, 3) zum Anliegen kommt.

11. Elastisches Lager nach Anspruch 1, dadurch gekennzeichnet, daß die elastische Masse (1) von dem Befestigungsteil (5) durch ein radiales Spiel (j1) und durch ein axiales Spiel (j2) getrennt ist, die die radiale und axiale Ausfederung des Lagers begrenzen.

## Claims

1. An elastic mounting intended to be interposed between two units, such as for example, a drive unit and the structure of an automobile vehicle, this mounting comprising a mass (1) made of an elastomeric material, of an annular shape, disposed between two frames (2, 3) whereof one is adapted to be joined to one of the two units and whereof the other is adapted to be joined to the other unit by means of a fixing member which passes through the mounting from side to side along its axis, at least one annular chamber (A) filled with fluid, being radially delimited towards the inside by the elastomeric mass, characterized in that the annular chamber (A) is radially delimited towards the outside by a flexible membrane (40), of a substantially semi-toric shape,

connected in a leak proof manner to each of the said frames (2, 3).

2. An elastic mounting according to claim 1, characterized in that the membrane (40) is made from an elastomeric material reinforced with textile or metallic threads (43) orientated along directions inclined in relation to the axis (X–X) of the mounting.

3. An elastic mounting according to claim 2, characterized in that the said directions are inclined along angles of less than 30° in relation to the axis (X–X) of the mounting.

4. An elastic mounting according to claim 1, characterized in that the one, (2), of the frames comprises a plate (21) pierced by a central opening and two frame members (23, 24) fixed to the inner and outer peripheries respectively of the said plate (21) and comprising concentric cylindrical portions, an annular elastic wall (50) being fixed between these two frame members to delimit a second annular chamber (B).

5. An elastic mounting according to claim 4, characterized in that the membrane (40) and the frame member (24) situated on the outer periphery of the plate (21) are fixed to this plate by one and the same member (25).

6. An elastic mounting according to claim 4, characterized in that the frame members (24, 25) are fixed to the plate (21) by a forming-over operation.

7. An elastic mounting according to claim 4, characterized in that a rigid annular member (60) is disposed in the second chamber (B) against the plate (21) and delimits with this plate a passageway (61) which communicates at two circumferentially interspaced points, on the one hand, with the first annular chamber (A) and, on the other hand, with the second annular chamber (B).

8. An elastic mounting according to claim 7, characterized in that the said rigid annular member (60) is axially maintained against the plate (21) by a step (23a) of the frame member (23) fixed to the inner periphery of this plate.

9. An elastic mounting according to any one of claims 1 to 8, characterized in that the, or each, annular chamber (A, B) is filled with a hydraulic fluid.

10. An elastic mounting according to claim 1, characterized in that the elastic mass (1) comprises a radial bead (11) against which the membrane (40) comes to bear at the level of at least one, (3), of the two frames (2, 3).

11. An elastic mounting according to claim 1, characterized in that the elastic mass (1) is separated from the fixing member (5) by a radial clearance (j1) and by an axial clearance (j2), to limit the radial and axial movements of the mounting.

FIG. 1

FIG.2